# FASCICULE DE BREVET EUROPEEN

(11) **EP 0 910 459 B1**
(45) Date de publication et mention de la délivrance du brevet: **19.09.2001**
(21) Numéro de dépôt: 97919211.9
(22) Date de dépôt: 25.04.1997
(51) Int. Cl.: B01D 53/34, B01D 53/18, B01D 53/78

(54) **PROCEDE ET DISPOSITIF D'EPURATION DE FUMEES**
VERFAHREN UND VORRICHTUNG ZUR RAUCHGASREINIGUNG
FUME PURIFICATION METHOD AND DEVICE

(30) Priorité: 10.07.1996 BE 9600626
(43) Date de publication de la demande: 28.04.1999
(73) Titulaire: CENTRE DE RECHERCHES METALLURGIQUES-CENTRUM VOOR RESEARCH IN DE METALLURGIE Assoc. sans but lucratif-Ver. zonder winstoogmerk, 1000 Bruxelles (BE)
(72) Inventeur: BROUHON, Jean-Marc, B-6940 Barvaux sur Ourthe (BE); JOSIS, Christian, B-4130 Esneux (BE); TUSSET, Vittorino, B-4680 Oupeye (BE)
(74) Mandataire: Van Malderen, Michel
(86) Numéro de dépôt international: BE9700050
(87) Numéro de publication internationale: WO9801216

(56) Documents cités:
- WO-A-95/10348
- DE-C- 4 116 515
- US-A- 4 002 721
- US-A- 4 263 263

## Description

La présente invention concerne un procédé d'épuration de fumées ou de gaz résiduaires issus de processus industriels et comprenant des composés nocifs dont l'élimination présente un intérêt certain, ainsi qu'un dispositif pour sa mise en oeuvre.

L'invention sera décrite dans le cadre restreint de la sidérurgie, plus particulièrement des installations d'agglomération de minerai de fer et des aciéries, mais il va de soi que son utilisation peut être étendue à tout processus industriel, en particulier de combustion, émettant des fumées ou gaz contenant des substances nocives.

Les fumées produites généralement dans le contexte des opérations sidérurgiques précitées sont chargées de diverses substances nocives telles que des métaux, des HAP (Hydrocarbures Aromatiques Polycycliques), des PCDD/F (Poly Chloro Dibenzo Dioxines/Furannes), du SO2 et aussi des poussières diverses.

L'épuration des fumées précitées est déjà effectuée depuis longtemps par diverses méthodes essentiellement basées sur la volonté de piéger l'une ou l'autre substance particulièrement nocive avec, pour résultat, un produit contenant l'élément piégé, qui est fort difficilement utilisable, donc recyclable ou stockable de par sa constitution même.

La présente invention a pour objet un procédé permettant d'une part d'épurer les fumées de manière non sélective, c'est-à-dire que presque toutes les substances nocives sont éliminées, et d'autre part de produire une matière contenant les substances nocives précitées qui est directement utilisable en recyclage.

le document DE-C-4 116 515 décrit l'utilisation d'une émulsion huile/eau pour traiter des fumées industrielles. Le procédé et le dispositif selon l'invention en diffère en ce que le n'on utilise pas, pour l'absorption une émulsion mais une huile et en ce que la mise en contact avec les fumées est différente.

Conformément à la présente invention, un procédé d'épuration de fumées industrielles, est défini dans la revendication 1. Un dispositif de mise en oeuvre d'un tel procédé est défini dans la revendication 9. On réalise eventuellement un dépoussiérage et/ou un refroidissement des fumées.

Suivant une modalité de mise en oeuvre du procédé, objet de la présente invention, l'huile est une huile usagée du type lubrifiant.

On a constaté que le passage de fumées ou de gaz résiduaires dans une colonne d'absorption donnait lieu à la sortie, d'une part, à un gaz qui ne présentait plus une concentration de substances nocives suffisante pour exiger une épuration complémentaire et, d'autre part, que l'huile recueillie était chargée par les substances nocives initialement présentes dans les fumées et jouait donc bien son rôle d'épurateur de ces dernières.

Suivant une autre modalité de mise en oeuvre du procédé, objet de la présente invention, l'huile recueillie suivant la modalité précédente est injectée dans une unité de combustion à haute température où elle joue un rôle de combustible; préférentiellement ces unités sont des incinérateurs à haute température ou les tuyères d'un haut-fourneau.

En effet, on a constaté que les huiles chargées très fortement tant en poussières qu'en diverses substances telles les métaux et les PCDD/F (Poly Chloro Dibenzo Dioxines/Furannes) pouvaient être injectées aux tuyères du haut-fourneau, où leur pouvoir calorifique élevé est particulièrement apprécié, et ne donnaient pas lieu à un surcroît d'émissions polluantes dans les fumées captées au gueulard.

Suivant une modalité de mise en oeuvre préférentielle du procédé, objet de la présente invention, on régule la température de l'huile en agissant soit sur la température des fumées entrant dans l'installation, soit sur la quantité d'huile qui est pulvérisée, soit sur les deux simultanément.

Suivant encore une autre modalité de mise en oeuvre du procédé, objet de la présente invention, on modifie les déplacements relatifs des fumées et de l'huile en fonction de la nature des fumées et de l'huile précitée.

On a constaté que la composition des fumées d'une part et la composition de l'huile d'autre part représentaient deux facteurs qui déterminent de façon décisive le choix du mode de contact optimal à réaliser entre les deux éléments précités, par exemple en déplacement à courants parallèles, croisés, inverses ou même en combinaisons diverses des différents modes dans un absorbeur à zone de contact unique ou à zones multiples.

Suivant une modalité de mise en oeuvre du procédé, objet de la présente invention, les fumées extraites de l'absorbeur subissent un traitement de conditionnement avant leur évacuation hors de l'installation relative au procédé de l'invention, par exemple vers une cheminée.

Suivant une modalité de mise en oeuvre préférentielle du procédé, objet de la présente invention, les fumées extraites de l'absorbeur subissent un refroidissement avant leur évacuation vers une cheminée.

Suivant une autre modalité de mise en oeuvre préférentielle du procédé, objet de la présente invention, les fumées extraites de l'absorbeur subissent, avant leur évacuation vers une cheminée, une opération de captation au moyen d'un système de piégeage de gouttelettes d'huile, par exemple au moyen d'un dévésiculeur à lit de fibres.

Suivant une variante d'une modalité précédente de mise en oeuvre préférentielle du procédé, objet de la présente invention, le refroidissement utilise comme source froide, en totalité ou seulement en partie, une substance à base hydrocarbonée liquide qui est introduite ultérieurement dans l'absorbeur.

Suivant une autre variante des modalités précédentes de mise en oeuvre préférentielle du procédé, objet de la présente invention, l'huile séparée des fumées extraites de l'absorbeur subit une opération de préparation, comme par exemple un cassage d'émulsion, de manière à augmenter sa concentration en matières grasses, avant sa réintroduction dans l'absorbeur.

On a constaté que ces modes opératoires étaient particulièrement intéressants du point de vue économique dans le cas où les fumées sont recueillies à une température telle que les opérations de refroidissement classiques peuvent être directement assurées dans le cadre du procédé de l'invention en récupérant la chaleur extraite pour faciliter la concentration en matières grasses de l'huile avant sa réintroduction dans l'absorbeur.

La présente invention a aussi trait à un dispositif pour la mise en oeuvre du procédé conformément à l'invention.

Le dispositif permettant l'application du procédé, objet de la présente invention, comporte essentiellement un élément, appelé absorbeur, qui est composé d'une part d'au moins une partie dans laquelle on réalise le contact entre les fumées et l'huile introduite sous forme pulvérisée et, d'autre part d'au moins une partie où les fumées sont recueillies après leur passage au travers d'un bain d'huile. Préférentiellement, la ou les parties dans laquelle ou lesquelles on réalise le contact entre les fumées et l'huile sous forme pulvérisée est située ou sont situées dans la partie centrale de l'absorbeur.

Suivant une modalité de réalisation du dispositif de l'invention, la partie de l'absorbeur, où les fumées sont recueillies après leur passage au travers d'un bain d'huile ,est reliée à un élément de traitement des fumées épurées extraites de l'absorbeur; préférentiellement ces dernières sont refroidies et/ou séparées des gouttelettes d'huile.

Suivant une autre modalité de réalisation du dispositif de l'invention, la partie de l'absorbeur, où les fumées ou gaz sont recueillis après leur passage au travers d'un bain d'huile, est reliée à un élément qui prépare l'huile avant sa réintroduction dans l'absorbeur.

Suivant une variante préférentielle de la modalité précédente de réalisation du dispositif de l'invention, l'élément qui prépare l'huile avant sa réintroduction dans l'absorbeur est une unité de cassage d'émulsion dont l'objectif est de concentrer en matières grasses l'huile recueillie.

Suivant encore une autre modalité de réalisation du dispositif de l'invention, l'élément de traitement des fumées épurées extraites de l'absorbeur est interconnecté avec l'élément qui prépare l'huile recueillie avant sa réintroduction dans l'absorbeur; préférentiellement cette dernière subit un réchauffement avant de passer dans l'unité de cassage d'émulsion.

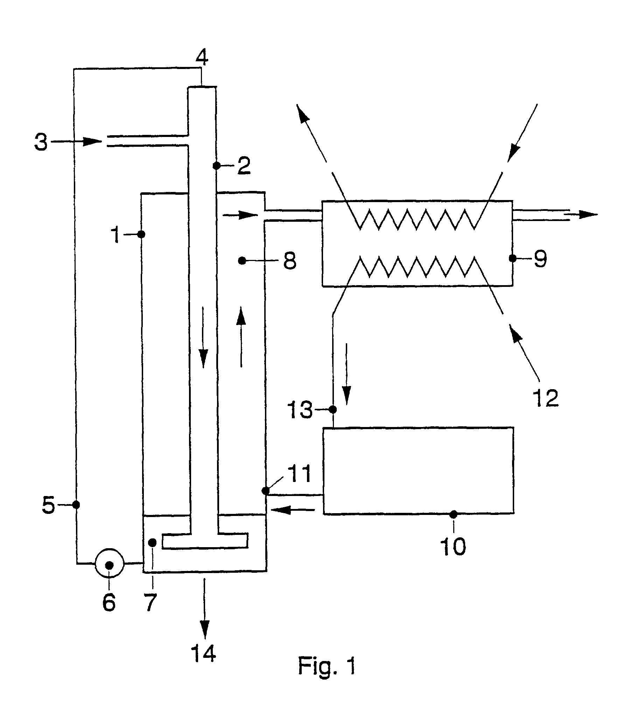

La figure 1 illustre schématiquement une variante de réalisation du dispositif de l'invention.

Suivant une variante préférentielle de réalisation du dispositif permettant l'application du procédé, objet de la présente invention, celui-ci comporte un élément ( 1 ) appelé absorbeur, composé d'une partie centrale (2) dans laquelle on réalise le contact entre les fumées introduites en (3) et l'huile pulvérisée qui est introduite en (4) via un circuit (5) de recyclage comportant une pompe (6) qui prélève l'huile dans le bain sis dans le fond (7) de l'absorbeur; la partie extérieure (8) de l'absorbeur, où les fumées sont recueillies après avoir traversé le bain précité, est connectée à une unité (9) de refroidissement et de séparation des gouttelettes d'huile entraînées par les fumées sortant de l'absorbeur; l'unité (9) précitée est associée à une unité ( 10) de préparation de l'huile recueillie avant sa réintroduction dans l'absorbeur en (11), l'unité (9) de refroidissement étant reliée en (12) à une source d'huile neuve et en (13) à l'unité de préparation (10); l'absorbeur (1) est aussi pourvu d'une unité (14) d'évacuation de l'huile usée vers un lieu d'utilisation tel qu'un haut-fourneau.

## Revendications

1. Procédé d'épuration de fumées industrielles contenant notamment des PCDD/F, dans lequel on met lesdites fumées en contact avec une substance à base hydrocarbonée liquide, **caractérisé en ce que** ladite substance à base hydrocarbonée liquide est une huile en ce qu'on introduit lesdites fumées dans une enceinte, en ce que l'on pulvérise, au moins en partie, dans les fumées à l'intérieur de ladite enceinte, en ce que l'on recueille ladite huile ainsi pulvérisée dans un bain de ladite huile, en ce que l'on fait ensuite circuler les fumées à travers ledit bain liquide et en ce que l'on capte lesdites fumées épurées à leur sortie dudit bain d'huile.»

2. Procédé suivant la revendication 1, **caractérisé en ce que** l'huile est une huile usagée du type lubrifiant.

3. Procédé suivant l'une ou l'autre des revendications 1 et 2, **caractérisé en ce que** l'on règle la température dudit bain d'huile en agissant soit sur la température desdites fumées introduites dans ladite enceinte, soit en agissant sur la quantité d'huile pulvérisée à l'intérieur de ladite enceinte, soit en agissant sur les deux moyens simultanément.

4. Procédé suivant l'une ou l'autre des revendications 1 à 3, **caractérisé en ce que** l'on sépare les gouttelettes d'huile présentes dans les fumées épurées et en ce que l'on soumet ladite huile ainsi récupérée à une opération de cassage d'émulsion avant sa réintroduction dans ledit bain d'huile.

5. Procédé suivant l'une ou l'autre des revendications 1 à 4, **caractérisé en ce que** l'on chauffe ladite huile avant son introduction dans ledit bain d'huile.

6. Procédé suivant l'une ou l'autre des revendications 1 à 5, **caractérisé en ce que** l'on refroidit lesdites fumées épurées après leur sortie dudit bain d'huile.

7. Procédé suivant l'une ou l'autre des revendications 1 à 6, **caractérisé en ce que** l'on prélève au moins une partie d'huile dudit bain d'huile et en ce qu'on l'utilise comme combustible dans une opération de combustion à haute température.

8. Procédé suivant la revendication 7, **caractérisé en ce que** l'on injecte ladite huile dans les tuyères d'un haut-fourneau.

9. Dispositif de mise en oeuvre du procédé suivant une ou plusieurs des revendications 1 à 8, **caractérisé en ce qu'**il comporte essentiellement un élément (1), appelé absorbeur, qui est composé d'une part d'au moins une enceinte (2) ou partie comportant des moyens aptes à réaliser le contact entre les fumées à épurer et une huile hydrocarbonée pulvérisée et d'autre part d'au moins une partie (8) où les fumées sont recueillies après leur passage au travers d'un bain composé de ladite huile hydrocarbonée (7).

10. Dispositif suivant la revendication 9, **caractérisé en ce que** la ou les parties (2) dans laquelle ou lesquelles on réalise le contact entre les fumées et l'huile est située ou sont situées dans la partie centrale de l'absorbeur (1)

11. Dispositif suivant les revendications 9 ou 10, **caractérisé en ce que** la partie (8) de l'absorbeur, où les fumées sont recueillies après leur passage au travers d'un bain composé d'huile, est reliée à un élément (9) de traitement des fumées épurées extraites de l'absorbeur (1), ledit élément (9) comprenant au moins un refroidisseur et/ou un séparateur de gouttelettes d'huile présentes dans les fumées épurées.

12. Dispositif suivant la revendication 11, **caractérisé en ce que** ledit élément (9) de traitement comprenant un separateur de gouttelettes d'huile est reliée à un élément (10) qui recueille l'huile ainsi séparée, ledit élément ( 10) comprenant au moins une unite de cassage d'émulsion, éventuellement précédée par une unité de réchauffement de l'huile avant son introduction dans l'unité de cassage de l'émulsion.

13. Dispositif suivant une ou plusieurs des revendications 9 à 12, **caractérisé en ce qu'**il comporte un élément (1) appelé absorbeur, composé d'une partie centrale (2) dans laquelle on réalise le contact entre les fumées introduites dans l'absorbeur (en 3) et l'huile pulvérisée qui est introduite (en 4) via un circuit (5) de recyclage comportant une pompe (6) qui prélève l'huile dans le bain sis dans le fond (7) de l'absorbeur, en ce que la partie extérieure (8) de l'absorbeur, où les fumées sont recueillies après avoir traversé le bain précité, est connectée à une unité (9) de refroidissement et de séparation des gouttelettes d'huile entraînées par les fumées sortant de l'absorbeur, en ce que l'unité (9) précitée est associée à une unité de préparation (10) recueillant l'huile séparée avant son introduction dans l'absorbeur (en 11) ladite unité de préparation (10) consistant en une unité de cassage d'émulsion, laquelle est préalablement réchauffée par la chaleur récupérée dans l'unité (9) lors du refroidissement des fumées, l'unité (9) de refroidissement étant reliée (en 12) à une source d'huile neuve et (en 13) à l'unité de préparation (10), et en ce que l'absorbeur (1) est pourvu d'une unité (14) d'évacuation d'huile usée. »

## Patentansprüche

1. Verfahren zur Reinigung von industriellen Rauchgasen, die insbesondere PCD-Dioxine/Furane enthalten, wobei bei dem Verfahren die Rauchgase in Kontakt mit einer Substanz auf flüssiger, bituminöser Basis gebracht werden, **dadurch gekennzeichnet, daß** die Substanz auf flüssiger, bituminöser Basis ein Öl ist, daß die Rauchgase in eine Umhüllung eingeleitet werden, daß die Rauchgase innerhalb der Umhüllung zumindest teilweise zerstäubt werden, daß das so zerstäubte Öl in einem Bad des Öls aufgefangen wird, daß danach die Rauchgase durch das flüssige Bad strömen gelassen werden, und daß die gereinigten Rauchgase beim Verlassen des Ölbades aufgefangen werden.

2. Verfahren gemäß Anspruch 1, **dadurch gekennzeichnet, daß** das Öl ein gebrauchtes Öl vom Typ Schmiermittel ist.

3. Verfahren gemäß irgendeinem der Ansprüche 1 und 2, **dadurch gekennzeichnet, daß** die Temperatur des Ölbades durch Einwirken auf entweder die Temperatur der in die Umhüllung eingeleiteten Rauchgase, oder durch Einwirken auf die innerhalb der Umhüllung zerstäubten Ölmenge, oder durch gleichzeitiges Einwirken auf die zwei Mittel eingestellt wird.

4. Verfahren gemäß irgendeinem der Ansprüche 1 bis 3, **dadurch gekennzeichnet, daß** die in den gereinigten Rauchgasen vorhandenen Öltröpfchen abgeschieden werden, und daß das so zurückgewonnene Öl vor der Wiedereinleitung in das Ölbad einer Emulsionsbrechung unterworfen wird.

5. Verfahren gemäß irgendeinem der Ansprüche 1 bis 4, **dadurch gekennzeichnet, daß** das Öl vor der Einleitung in das Ölbad erhitzt wird.

6. Verfahren gemäß irgendeinem der Ansprüche 1 bis 5, **dadurch gekennzeichnet, daß** die gereinigten Rauchgase nach dem Verlassen des Ölbades abgekühlt werden.

7. Verfahren gemäß irgendeinem der Ansprüche 1 bis 6, **dadurch gekennzeichnet, daß** mindestens ein Teil des Öls aus dem Ölbad entnommen wird, und daß dieser Teil bei einer Verbrennung mit hoher Temperatur als Brennstoff verwendet wird.

8. Verfahren gemäß Anspruch 7, **dadurch gekennzeichnet, daß** das Öl in die Düsen eines Hochofens eingespritzt wird.

9. Vorrichtung zur Verwirklichung des Verfahrens gemäß einem oder mehreren der Ansprüche 1 bis 8, **dadurch gekennzeichnet, daß** sie im wesentlichen ein Absorber genanntes Element (1) umfaßt, bestehend einerseits aus mindestens einer Umhüllung (2) oder einem Teil, der Mittel umfaßt, die geeignet sind, den Kontakt. zwischen den zu reinigenden Rauchgasen und einem zerstäubten bituminösen Öl zu verwirklichen, und andererseits aus mindestens einem Teil (8), wo die Rauchgase nach ihrem Durchgang durch ein Bad, das aus dem bituminösen Öl (7) besteht, aufgefangen werden.

10. Vorrichtung gemäß Anspruch 9, **dadurch gekennzeichnet, daß** der Teil oder die Teile (2), in dem oder in denen der Kontakt zwischen den Rauchgasen und dem Öl verwirklicht wird, in dem mittleren Teil des Absorbers (1) gelegen ist oder gelegen sind.

11. Vorrichtung gemäß den Ansprüchen 9 oder 10, **dadurch gekennzeichnet, daß** der Teil (8) des Absorbers, wo die Rauchgase nach dem Durchgang durch ein aus Öl bestehendem Bad aufgefangen werden, mit einem Element (9) zur Behandlung der äus dem Absorber (1) extrahierten, gereinigten Rauchgase verbunden ist, wobei das Element (9) mindestens einen Kühler und/oder einen Abscheider für die in den gereinigten Rauchgasen vorhandenen Öltröpfchen aufweist.

12. Vorrichtung gemäß Anspruch 11, **dadurch gekennzeichnet, daß** das Behandlungselement (9), das einen Öltröpfchen-Abscheider aufweist, mit einem Element (10) verbunden ist, welches das so abgeschiedene Öl auffängt, wobei das Element (10) mindestens eine Emulsionsbrechungseinheit aufweist, wobei eventuell eine Ölerhitzungseinheit vorgesehen ist, bevor das Öl in die Emulsionsbrechungseinheit eingeleitet wird.

13. Vorrichtung gemäß irgendeinem der Ansprüche 9 bis 12, **dadurch gekennzeichnet, daß** sie ein Absorber genanntes Element (1) umfaßt, das aus einem. mittleren Teil (2) besteht, in dem der Kontakt verwirklicht wird zwischen den (bei 3) in den Absorber eingeleiteten Rauchgasen und dem zerstäubten Öl, das über einen Rückführungskreis (5) (bei 4) eingeleitet wird, wobei der Rückführungskreis (5) eine Pumpe (6) umfaßt, die das Öl in dem in dem unteren Teil (7) des Absorbers gelegenen Bad entnimmt, daß der äußere Teil (8) des Absorbers, wo die Rauchgase aufgefangen werden, nachdem sie das obige Bad durchquert haben, mit einer Einheit (9) zur Abkühlung und Abscheidung der Öltröpfchen, die von den aus dem Absorber ausströmenden Rauchgasen mitgerissen werden, verbunden ist, daß die obige Einheit (9) mit einer Vorbereitungseinheit (10) kombiniert ist, die das abgeschiedene Öl auffängt vor der Einführung (bei 11) in den Absorber, wobei die Vorbereitungseinheit (10) aus einer Emulsionsbrechungseinheit besteht, die vorher durch die in der Einheit (9) bei der Abkühlung der Rauchgase zurückgewonnene Wärme erhitzt wird, wobei die Abkühleinheit (9) (bei 12) mit einer Quelle für neues Öl und (bei 13) mit der Vorbereitungseinheit (10) verbunden ist, und daß der Absorber (1) mit einer Einheit (14) zur Abführung von gebrauchtem Öl versehen ist.

## Claims

1. An industrial fume purification process, comprising for example PCDD/F, wherein said fumes are contacted with a liquid hydrocarbon basis substance, **characterized in that** said liquid hydrocarbon basis substance is an oil, said fumes are fed into an enclosure, said oil is atomized at least partly in the fumes inside said enclosure, said oil, thus atomized, is collected in a bath of said oil, fumes are subsequently circulated through said liquid bath and said purified fumes are captured when leaving said oil bath.

2. A process according to claim 1, **characterized in that** the oil is a lubricant-type waste oil.

3. A process according to any one of claims 1 and 2, **characterized in that** the temperature of said oil bath is controlled either by acting upon the temperature of said fumes being fed into said enclosure, upon the oil quantity being atomized inside said enclosure, or upon both means simultaneously.

4. A process according to any one of claims 1-3, **characterized in that** the oil droplets present in the purified fumes are separated and said oil, thus recovered, is subjected to an emulsion breaking operation before being reintroduced into said oil bath.

5. A process according to any one of claims 1-4, **characterized in that** said oil is heated before being introduced into said oil bath.

6. A process according to any one of claims 1-5, **characterized in that** said purified fumes are cooled after leaving said oil bath.

7. A process according to any one of claims 1-6, **characterized in that** at least part of the oil is taken out from said oil bath and is used as a fuel in a high temperature firing operation.

8. A process according to claim 7, **characterized in that** said oil is injected into the nozzles of a furnace.

9. A device for carrying out the process according to one or more of claims 1-8, **characterized in that** it comprises essentially a component (1), so-called an absorber, which comprises, on the one hand, at least one enclosure (2) or one part provided with means able to achieve contact between the fumes to be purified and an atomized hydrocarbon oil and, on the other hand, at least one part (8) where the fumes are collected after passing through a bath consisting in said hydrocarbon oil (7).

10. A device according to claim 9, **characterized in that** the part or parts (2), in which the contact between the fumes and the oil is or are carried out, is or are located in the centre part of the absorber (1).

11. A device according to claim 9 or 10, **characterized in that** the absorber part (8), in which the fumes are collected after passing- through a bath consisting in oil, is connected to an element (9) for processing the purified fumes extracted from the absorber (1), said element (9) comprising at least a cooler and/or a separator for oil droplets being present in the purified fumes.

12. A device according to claim 11, **characterized in that** said processing element (9) comprising an oil droplet separator is connected with an element (10) which collects the oil thus separated, said element (10) comprising at least an emulsion breaking unit, optionally preceded by an oil heating unit before being fed into the emulsion breaking unit.

13. A device according to one or more of. claims 9-12, **characterized in that** it comprises an element (1), so-called absorber, consisting in a centre part (2) in which a contact is achieved between the fumes introduced into the absorber (at 3) and the atomized oil being fed (at 4) by means of a recycling circuit (5) comprising a pump (6) taking out the oil from the bath located in the absorber bottom (7), the absorber external part (8), where the fumes are collected after passing through said bath, is connected with a unit (9) for cooling and separating the oil droplets dragged by fumes leaving the absorber, said unit (9) is combined with a preparation unit (10) collecting the separated oil before being fed into the absorber (at 11), said preparation unit (10) consisting in an emulsion breaking unit, which is pre-heated by heat recovered in the unit (9) upon cooling the fumes, the cooling unit (9) being connected (at 12) with a new oil source and (at 13) with the preparation unit (10), and the absorber (1) is provided with a discharge unit (14) for the waste oil.
